# EUROPÄISCHE PATENTSCHRIFT

(11) **EP 2 380 813 B1**
(45) Veröffentlichungstag und Bekanntmachung des Hinweises auf die Patenterteilung: **06.03.2013**
(21) Anmeldenummer: 10160881.8
(22) Anmeldetag: 23.04.2010
(51) Int. Cl.: B65B 69/00, B65G 53/42

(54) **Verfahren und Vorrichtung zum Entleeren von Schüttgut**
Method and device for emptying bulk material
Procédé et dispositif pour décharger des produits en vrac

(43) Veröffentlichungstag der Anmeldung: 26.10.2011
(73) Patentinhaber: HELIOS Gerätebau für Kunststofftechnik GmbH, 83022 Rosenheim (DE)
(72) Erfinder: Wilhelm Klaus, 83026 Rosenheim (DE)
(74) Vertreter: Alber, Norbert

(56) Entgegenhaltungen:
- EP-A1- 0 528 755
- EP-A1- 1 199 266
- DE-A1-102006 061 810
- DE-B1- 1 756 049
- DE-C- 582 374
- US-A- 6 036 408

## Beschreibung

### I. Anwendungsgebiet

Die Erfindung betrifft ein Verfahren sowie eine Vorrichtung zum Entleeren von Schüttgutbehältern von oben her.

### II. Technischer Hintergrund

Von den hier in Rede stehenden Schüttgütern weisen vor allem Pulver - weniger Granulate - die Eigenschaft auf, dass sie einerseits in den Transportbehältern durch Umwelteinflüsse wie Erschütterungen, Luftfeuchtigkeit etc. sehr stark verdichten und zusammenbacken können, andererseits jedoch je nach Schüttgut beim Entleeren eines solchen Behälters auch zu starker Staubentwicklung neigen, was regelmäßig - allein schon aufgrund der dadurch bestehenden Explosionsgefahr - nachteilig ist, erst recht bei gesundheitsschädlichen Stoffen.

Je nach Art des Transportbehälters werden diese auf unterschiedliche Art und Weise entleert.

Bekannt ist beispielsweise die Entleerung von Transportbehältern nach unten durch einen in der Unterseite vorhandenen Auslass.

Dies ist bei sackartigen Transportbehältern ebenso bekannt wie bei formhaltigen Behältern wie Silos.

Diese Methode ist besonders nachteilig bei mangelnder Rieselfähigkeit des darin enthaltenen Schüttgutes, da bei schlechter Rieselfähigkeit Hilfsmittel wie Klopfer, Vibratoren, Belüftungselemente etc. eingesetzt werden müssen.

Zusätzlich ist das Anschließen des Auffangbehälters an die untere Öffnung unter Umständen schwierig, da sie das Hochheben des gesamten Transportbehälters erfordern kann.

Ebenso ist eine genaue Dosierbarkeit der entnommenen Menge häufig schwierig.

Bei Mengen bis etwa 2 t sind daher als Transportbehälter sogenannte BigBags, also große sackartige Behältnisse, sehr verbreitet, oder auch sogenannte Oktabins, also Behälter mit einer festen achteckigen Umfangswand, in denen ein flexibler Innenbehälter in Form eines Foliensackes liegt, der das Schüttgut beinhaltet.

Beide sind jeweils nach oben offen, verfügen in der Regel über keine untere Entnahmeöffnung, und werden daher von oben her entleert, in aller Regel mittels Absaugvorrichtungen, die mit Unterdruck arbeiten.

Durch das Absaugen von oben mittels Unterdruck wird systembedingt auch die Staubentwicklung verringert, wenn auch nicht vollständig vermieden, da bei nachrutschenden Kratern Staubentwicklungen auftreten, die außerhalb des Saugbereiches des Saugrohres oder Saugkopfes liegen können und von diesem daher nicht mehr vollständig beseitigt werden.

Gerade Pulver als Schüttgüter werden in der Kunststoffindustrie in Form von PVC-Pulver für die Herstellung von PVC-Kunststoffteilen verwendet oder als

Harzrohstoffe als Rohmaterial für die Herstellung von Klebstoffen, als Farbpigmente, oder in der Lebensmittelindustrie in Form von Grundstoffen von Mehl über Stärke oder Verdickungsmittel bis zu Aromastoffen.

Die hier in Rede stehenden Entleervorrichtungen bestehen dabei üblicherweise - siehe beispielsweise DE 102004015014.1 - aus einem galgenförmigen oder portalförmigen Grundgestell, unter welches der nach oben offene Transportbehälter gestellt wird.

Von diesem Grundgestell aus wird von oben her eine Absaugvorrichtung in den oben offenen Transportbehälter eingeführt und mittels Absaugen über einen mit Unterdruck beaufschlagten Absaugschlauch das Schüttgut zur gewünschten Stelle transportiert.

Die Absaugvorrichtung hängt dabei in der Regel an einem ersten Hebezeug, mit dem die Höhe der Absaugvorrichtung im Transportbehälter eingestellt werden kann.

Als Absaugvorrichtung dient im einfachsten Falle ein Saugrohr, welches jedoch an seinem vorderen Ende nur einen kleinen Durchmesser besitzt und deshalb über den demgegenüber vergleichsweise großen Oberflächenbereich des Behälters, der größer als 1 m² sein kann, in allen Querrichtungen und auch in der Vertikalen z. B. von einer Bedienperson nachgeführt werden muss.

Da dies zum einen personalintensiv ist und zum anderen bei verhärtetem Pulver kein kontinuierliches Absaugen ermöglicht, ist es aus der DE 4218331 bereits bekannt, mittels einer entsprechenden Hilfsvorrichtung mit einem solchen Saugrohr einen Behälter von oben her lagenweise zu entleeren, indem das Saugrohr sensorgesteuert immer in einem geringen Abstand über der Oberfläche des Pulvers oder des anderen Schüttgutes gehalten wird und dabei in einem vorgegebenem Flächenmuster die gesamte Oberfläche des Schüttgutbehälters abfährt, bis die nächste tiefere Lage abgearbeitet werden kann.

Dies behebt jedoch nicht das Problem, dass bei stark verhärteten Schüttgütern wie Pulvern die Saugkraft des Saugrohres ohne zusätzliche Auflockerung des Pulvers nicht mehr ausreicht, um Pulver aus dem Behälter abzusaugen.

Weitere Probleme liegen im Ansaugen des Foliensackes durch das Saugrohr gegen Ende der Entleerung.

Deshalb wird anstelle eines einfachen Saugrohres häufig ein demgegenüber verbreiterter Saugkopf verwendet, der mit einem größeren Außendurchmesser am umgebenden Schüttgut anliegt oder auf diesem Schüttgut schwimmt, wobei vorzugsweise noch Vibrationen in das Schüttgut vom Saugkopf aus eingebracht werden, um dieses besser rieselfähig zu machen.

Auch dies kann jedoch bei stark verhärteten Pulvern unter Umständen nicht ausreichen.

Als weitere Maßnahme kann gleichzeitig der sackartige, flexible Transportbehälter am oberen Rand mittels eines zweiten Hebezeuges hochgezogen werden, wodurch die Flanken des Transportbehälters zunehmend steiler werden.

Wenn der Haltering des Hebezeuges, an dem der obere Rand des Transportbehälters befestigt wird, einen geringeren Durchmesser besitzt als der Behälter im gefüllten Zustand, werden durch das Hochziehen die Seitenwände des Behälters nach innen gedrückt und zum Einsturz gebracht, was jedoch erst bei teilweise oder überwiegend entleertem Behälter sinnvoll ist, also wenn die seitlich stehen gebliebenen Wände nicht mehr allzu dick sind. Eine weitere Schwierigkeit liegt darin, dass gerade pulverige Schüttgüter in einem Transportbehälter ausgeliefert werden, deren obere Öffnung meist kleiner als 350 mm ist. Hierfür können viele große Saugköpfe nicht verwendet werden oder damit keine ausreichenden Bewegungen in den Querrichtungen auf der Oberfläche des Schüttgutes durchgeführt werden.

Die Nachteile dieser bekannten Methoden zur Entleerung von Schüttgutbehältern liegen somit zusammengefasst in
- Unmöglichkeit des Absaugens wegen zu starker Verfestigung des Schüttgutes
- notwendigen Maßnahmen zur Eindämmung der Staubentwicklung,
- schlechte Dosierbarkeit des Entleervorganges beim Entleeren von unten und
- gegebenenfalls Aufwand zum An- und Abkoppeln des Transportbehälters insbesondere an eine unterseitige Entleervorrichtung
- Unmöglichkeit der restlosen Entleerung
- keine Entleerung möglich bei zu kleinem Durchmesser der oberen Öffnung.

### III. Darstellung der Erfindung

### a) Technische Aufgabe

Es ist daher die Aufgabe gemäß der Erfindung, ein Verfahren und eine Vorrichtung zum Entleeren von Schüttgutbehältern zu schaffen, die unter Vermeidung der Nachteile des Standes der Technik einfach und kostengünstig herstellbar und einfach in der Anwendung und Handhabung ist, insbesondere bei nicht frei fließenden Schüttgütern wie etwa Pulvern.

### b) Lösung der Aufgabe

Diese Aufgabe wird durch die Merkmale der Ansprüche 1 und 11 gelöst. Vorteilhafte Ausführungsformen ergeben sich aus den Unteransprüchen.

Beim Entleeren des Transportbehälters wird ein Saugkopf zwar von oben her in das Schüttgut eingeführt, aber erfindungsgemäß erfolgt der Abbau des Schüttgutes jedoch nicht wie üblich von oben her, wobei meist auf das kraterförmige Nachrutschen des rieselfähigen Schüttgutes im Stand der Technik gesetzt wurde, sondern im Gegensatz dazu von unten her:

Zunächst wird durch Absenken des Saugkopfes und aktivierter Absaugung ein schmales, in der Regel vertikales, Absaugloch in der Mitte des Schüttgutes erzeugt, bis sich der Saugkopf nahe des Bodens des Transportbehälters befindet.

Trotz der senkrechten Wände wird dieses Absaugloch bei üblicherweise sehr schlecht rieselfähigem Pulver nicht von selbst zusammenbrechen.

Anschließend wird das untere Ende dieses schmalen, aufrechtstehenden Absaugloches zunächst im unteren Bereich erweitert, vorzugsweise auf einen Durchmesser, der annähernd dem gesamten inneren Durchmesser des Transportbehälters entspricht.

Dies kann erreicht werden, indem beispielsweise das gegenüber dem Oberteil des Saugkopfes seitlich auslenkbare Unterteil abwechselnd in verschiedene Auslenkrichtungen ausgelenkt wird oder eine kreisende Bewegung mit zunächst kleinem und immer größer werdendem Radius vollzieht oder simuliert, selbstverständlich auch dies bei aktivierter Absaugung.

Auf diese Art und Weise entsteht ein unteres stark erweitertes Absaugloch, meist mit einer kegelförmig schräg nach oben zum schmalen Absaugloch hin ansteigenden Decke.

Zum weiteren Abbau des Schüttgutes wird nun diese meist kegelförmige Decke des erweiterten Absaugloches von unten nach oben abgetragen, beispielsweise durch wechselseitiges Auslenken des Unterteiles des Saugkopfes gegenüber dessen im schmalen Absaugloch verbleibenden Oberteil, kombiniert mit einem langsamen nach oben Fahren des Saugkopfes.

Der Saugkopf, insbesondere dessen Oberteil, ist dabei in Querrichtung gehalten, um überhaupt einen Druck in Querrichtung gegen das Schüttgut aufbringen zu können.

Dies kann durch eine stabile vertikale Führung des Saugkopfes erfolgen, die in der Lage ist, Querkräfte vom Saugkopf aufzunehmen und auf das Grundgestell zu übertragen.

Durch diesen Abbau von unten nach oben ist man nicht auf die Rieselfähigkeit des Schüttgutes angewiesen.

Sollte das Schüttgut dennoch wider Erwarten so rieselfähig sein, dass die Wände des Absaugloches einstürzen, so ist dies kein Nachteil für den nachfolgenden Abbauvorgang, sondern beschleunigt diesen sogar.

In vielen Fällen wird dies jedoch geschehen und der Abbau erfolgt von dem unteren erweiterten Absaugloch nach oben, was den zusätzlichen Vorteil bietet, dass dort beim Abbau entstehende Staubentwicklungen nur in sehr geringem Maße durch das schmale aufrechte zentrale Absaugloch nach oben austreten können, da dieses durch das im Zentrum stehende nicht auslenkbare Oberteil des Saugkopfes zum Großteil verschlossen wird. Dennoch nach oben austretender Staub kann durch eine Staubabdeckung zurückgehalten werden, die oberhalb des Transportbehälters den Freiraum zwischen der zentralen aufrechtstehenden Führung für den Saugkopf und den umgebenden Haltering abdeckt, was jedoch nur Sinn macht, wenn der Transportbehälter umlaufend dicht an dem Haltering befestigt ist.

Damit ein Absaugen des Schüttgutes von unten her überhaupt möglich ist, muss das Schüttgut im Bereich um die freie Öffnung des Saugrohres herum aktiv fluidisiert werden, wofür bekanntermaßen Vibratoren eingesetzt werden.

Bekannt war es beispielsweise, den gesamten Saugkopf in Schwingung zu versetzen, der dadurch an seinen Kontaktstellen zum Schüttgut diese Schwingungen auf das Schüttgut überträgt.

Der Saugkopf bestand dabei jedoch meist aus einem mehr oder weniger geschlossenen Gehäuse aus Stahlblech, dessen Blechteile naturgemäß an ihren gesamten Umfangsflächen an anderen Bauteilen befestigt waren.

Erfindungsgemäß erfolgt dagegen die Fluidisierung mit Hilfe von in Schwingung versetzten Schwingelementen, die nur einseitig am Saugkopf befestigt sind und ein frei schwingendes, nicht befestigtes anderes Ende aufweisen, welches dadurch sehr viel leichter schwingen kann und mit einer größeren Amplitude schwingen kann als ein geschlossenes Gehäuse oder ein an beiden Enden befestigtes Schwingelement wie etwa ein Bügel.

Bevorzugt werden zu diesem Zweck Schwingstäbe verwendet, die in der Umgebung der Saugrohröffnung angeordnet sind.

Der Vibrator, - der vorzugsweise in seiner Frequenz und/oder seiner Amplitude einstellbar ist - der die Schwingelemente in Schwingung versetzt, wird dabei vorzugsweise mittels Druckluft betrieben.

Beim Einbringen des schmalen Absaugloches kann es sein, dass das mittig und fluchtend zum Oberteil ausgerichtete Unterteil des Saugkopfes kein Absaugloch erzeugen kann, welches groß genug ist, um das Gehäuse des Saugkopfes hindurchzuführen.

In diesem Fall muss bereits beim Einbringen des schmalen Absaugloches das Unterteil ständig ausgelenkt werden gegenüber dem Oberteil, um durch kreisende oder wechselnd auslenkende Bewegungen den Durchmesser des schmalen Absaugloches mindestens auf die Größe des Gehäuses des Saugkopfes zu bringen.

All diese Auslenkbewegungen des Saugkopfes, gegebenenfalls kombiniert mit Hubbewegungen oder Senkbewegungen von Saugkopf und/oder Transportbehälter, werden von einer zentralen Steuerung gesteuert, die vorzugsweise mehrere Programme für Bewegungsabläufe des Saugkopfes und der gesamten Entleervorrichtung enthält, die automatisch - gegebenenfalls in Abhängigkeit von der Art des vom Bediener vorgegebenen Schüttgutes - ausgewählt werden.

Zum Zweck der automatischen Steuerung kann die Entleervorrichtung auch einen oder mehrere Sensoren, z.B. am Saugkopf oder am Hebezeug des Saugkopfes, umfassen, die das Annähern oder Kontaktieren des Saugkopfes oder Teilen des Saugkopfes an dem Schüttgut detektieren.

Um ein kaum rieselfähiges Schüttgut wie etwa ein verdichtetes Pulver mit einer gattungsgemäßen Entleervorrichtung entleeren zu können, weist eine solche Entleervorrichtung erfindungsgemäß die erste Besonderheit auf, dass der Saugkopf zum einen an einer aufrechtstehenden Führung geführt ist, die in der Lage ist, auch Querkräfte aufzunehmen, wie sie entstehen, wenn der an der Führung befestigte Saugkopf seitlich gegen das verhärtete Schüttgut gedrückt wird und dabei trotz aktivierter Absaugung der Abbau des Schüttguts nur langsam vorangeht.

Die zweite Besonderheit besteht darin, dass die Öffnung des Saugrohres gegenüber dem Rest des Saugkopfes seitlich verlagerbar ist.

Dies kann beispielsweise dadurch erfolgen, dass der Saugkopf aus einem Oberteil besteht, welches an der aufrechten Führung z.B. zum Zwecke des Hebens und Senkens befestigt ist, und an dem ein demgegenüber verlagerbares, insbesondere verschwenkbares oder kreisendes, Unterteil befestigt ist.

Mittels Schwenkvorrichtungen, beispielsweise ausfahrbaren Schwenkzylindern, die über den Umfang verteilt etwa im Oberteil angeordnet sein können, kann das Unterteil und damit das Saugrohr, das das Unterteil durchläuft und die Saugrohröffnung, in mehrere, vorzugsweise jede beliebige Richtung gegenüber dem Oberteil verschwenkt werden.

Auch kreisende Bewegungen der Saugrohröffnung sind möglich, entweder durch Drehantrieb des Unterteils oder durch entsprechende Ansteuerung der Schwenkvorrichtungen, bei nicht drehendem Unterteil.

Eine andere Lösung könnte darin bestehen, dass das Saugrohr mit der freien Saugrohröffnung schräg zur Längs-Richtung der Führung aus dem Saugkopf hervorsteht und schräg ausfahrbar ist und zusätzlich der Saugkopf oder zumindest das Unterteil des Saugkopfes, falls es sich um einen zweiteiligen Saugkopf handelt, drehbar ist.

Die Drehrichtung sollte auf alle Fälle auch umkehrbar sein.

Bei einem gegenüber dem Oberteil auslenkbaren Unterteil muss das den Saugkopf durchlaufende Saugrohr zumindest in diesem Bereich des Unterteiles flexibel ausgebildet sein, insbesondere als Saugschlauch, um diese Schwenkbewegungen vollziehen zu können.

Ein einfacher Aufbau der Schwenkvorrichtungen besteht in Schwenkzylindern, die parallel zur Längsrichtung der Führung im Oberteil um das Saugrohr herum angeordnet sind, und deren Kolbenstangen am freien Ende an einer Endplatte des Unterteils des Saugkopfes befestigt sind, welche das untere Ende des Gehäuses des Unterteiles darstellt und lediglich vom Saugrohr, welches nach unten vorsteht, durchdrungen wird.

Im freien Endbereich sind die Kolbenstangen gelenkig gestaltet, etwa indem sie aus begrenzt biegsamen Schläuchen, etwa Hydraulikschläuchen oder Flexrohren, bestehen, oder jeweils mindestens ein Gelenk, vorzugsweise ein Kardan- oder Kugelgelenk, enthalten. So kann durch gezieltes Ausfahren dieser Schwenkzylinder die Endplatte und damit das freie Ende des Saugrohres in jede gewünschte Richtung eingestellt werden und auch eine kreisende Bewegung des freien Endes des Saugrohres durchgeführt werden.

Sowohl das Oberteil als auch das Unterteil des Saugkopfes sind von einem dicht geschlossenen Gehäuse umgeben, in dem sich beispielsweise auch die Schwenkzylinder und deren Kolbenstangen befinden, um Verschmutzungen des Schüttgutes zu vermeiden, vor allem, wenn es sich dabei um Lebensmittel handelt.

Wie bereits erwähnt, wird das Schüttgut im Bereich der Saugrohröffnung fluidisiert durch dort angebrachte Schwingelemente.

Diese werden in Schwingung versetzt durch einen Vibrator, der schwingungstechnisch mit den Schwingelementen verbunden ist.

Beispielsweise sitzt der Vibrator auf der Rückseite der Endplatte des Gehäuses des Unterteiles auf, und befindet sich damit innerhalb des Gehäuses, während von der Außenseite der Endplatte die Schwingelemente abragen.

Dadurch wird eine gute schwingungstechnische Anbindung der Schwingelemente an den Vibrator erreicht, vor allem wenn diese Endplatte zusätzlich vom Rest des Gehäuses und des Saugkopfes schwingungstechnisch entkoppelt ist.

Die Schwingelemente, insbesondere die Schwingstäbe, verlaufen dabei vorzugsweise parallel zur Längsrichtung des Saugrohres und dessen freien Endbereich, und stehen über das freie Ende des Saugrohres geringfügig vor.

Die Schwingstäbe sind dabei in einer oder auch mehreren Reihen um das Saugrohr herum angeordnet und bilden dadurch einen Schwingkranz, der insgesamt eine zylindrische oder auch kegelige Form - betrachtet von der Seite - aufweisen kann.

Die Größe des Schwingkranzes kann kleiner, gleichgroß oder auch größer als der Durchmesser des Gehäuses des Saugkopfes gewählt werden.

Je dichter das Schüttgut ist, umso geringer wird der Abstand sein, in dem eine Fluidisierung des Schüttgutes um das Saugrohr noch Sinn macht.

Zum leichteren Einsaugen können in der Wandung des Saugrohres vom offenen Ende her eingebrachte Schlitze vorhanden sein, deren Dicke etwa dem maximalen Partikeldurchmesser des Schüttgutes entspricht.

Der Abstand der Schwingelemente sollte vorzugsweise größer sein als der Durchmesser bzw. die Dicke der Schwingelemente. Bei Schwingstäben hat sich eine Dicke der Schwingstäbe von 1 mm bis 10 mm, vorzugsweise von 2 mm bis 5 mm, als sinnvoll erwiesen, wobei die Schwingstäbe in der Regel aus Metall bestehen, wie auch die Endplatte.

Die axiale Länge der Schwingelemente, insbesondere Schwingstäbe, sollte vorzugsweise mindestens dem Halben, besser dem Ganzen, des Durchmessers des Saugrohres entsprechen.

Der Radius, den durch eine Kreisbewegung das maximal ausgelenkte untere Ende des Saugrohres fahren kann, sollte natürlich größer sein als der Durchmesser des Gehäuses des Saugkopfes, und insbesondere annähernd dem inneren Durchmesser des Transportbehälters entsprechen, um einen möglichst großen Teil der Grundfläche des Transportbehälters auf die beschriebene Art und Weise abarbeiten zu können.

Die Führung für den Saugkopf in der Vertikalen oder Aufrechten muss nicht unbedingt auch einen Antrieb zum Heben und Senken umfassen.

Das Heben und Senken kann unabhängig von der Führung von einem separaten Hebezeug realisiert werden, welches beispielsweise einen Seilzug umfasst, an dem der Saugkopf hängt, so dass er nur in Querrichtung von der Führung gehalten wird.

Die Führung kann deshalb aus einer einfachen Teleskopstange mit mehreren Teleskopelementen, vorzugsweise mindestens drei Teleskopelementen, bestehen, damit die Teleskopstange möglichst wenig nach oben über die Quertraverse des Grundgestells vorsteht und dadurch die Bauhöhe für die Entleervorrichtung nicht zu groß wird.
Außer dem ersten Hebezeug mit Seilzug für den Saugkopf kann ein zweites Hebezeug ebenfalls mittels Seilzug zum Anheben des Transportbehälters vorhanden sein.

Beide Seilzüge sind dabei vorzugsweise jeweils mit der Kolbenstange eines entsprechenden Arbeitszylinders, also des Saugkopfzylinders im einen Fall und des Behälterzylinders im anderen Fall, verbunden, die meist pneumatisch betrieben sind und sich vorzugsweise an oder neben der Vertikalstrebe des Grundgestells befinden.

Wie bekannt, wird ein sackartiger Transportbehälter wie etwa der Foliensack eines Oktabins an diesem zweiten Hebezeug mittels eines horizontal liegenden Halteringes befestigt, an dessen Umfang der Transportbehälter befestigt wird und der seinerseits an dem Hebezeug aufgehängt ist.

### c) Ausführungsbeispiele

Ausführungsformen gemäß der Erfindung sind im Folgenden beispielhaft näher beschrieben. Es zeigen:
- Fig. 1:: die Entleervorrichtung beim Abbau des Schüttgutes von oben her,
- Fig. 2:: die Entleervorrichtung beim Abbau des Schüttgutes von unten,
- Fig. 3:: den Saugkopf im Detail und
- Fig. 4:: den Schwingkranz im Detail.

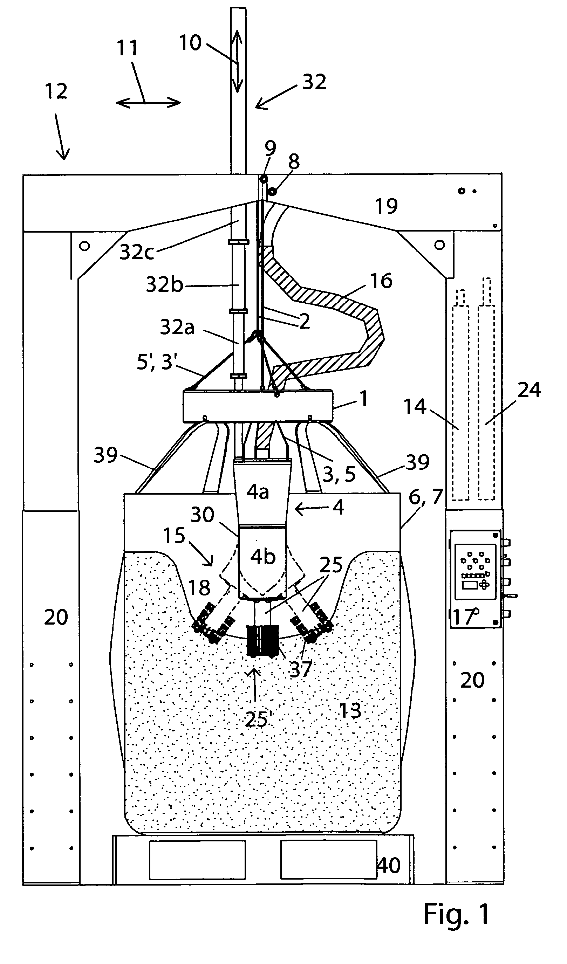

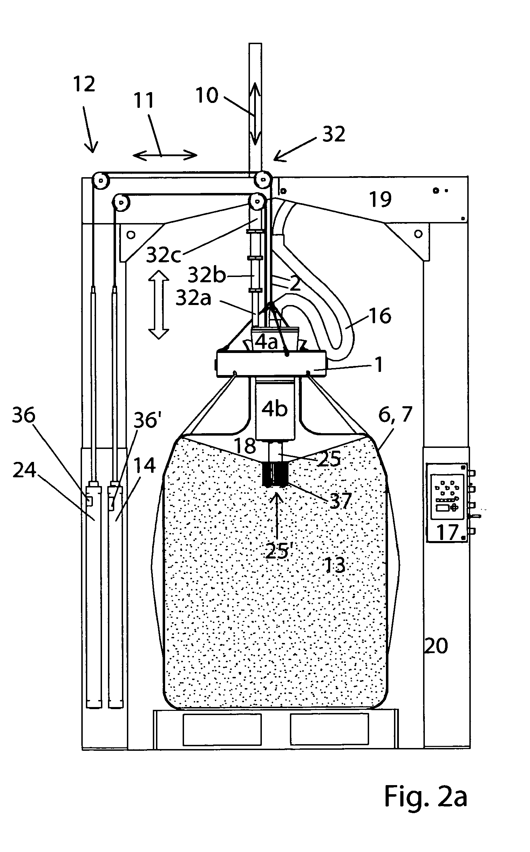

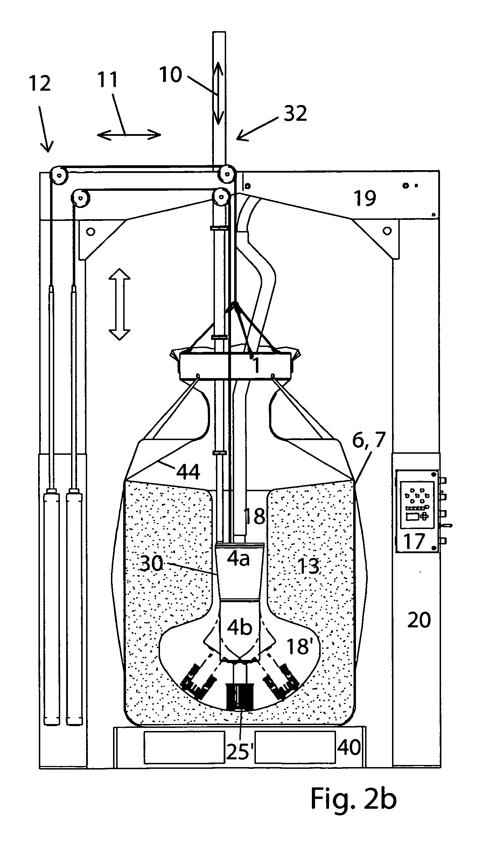

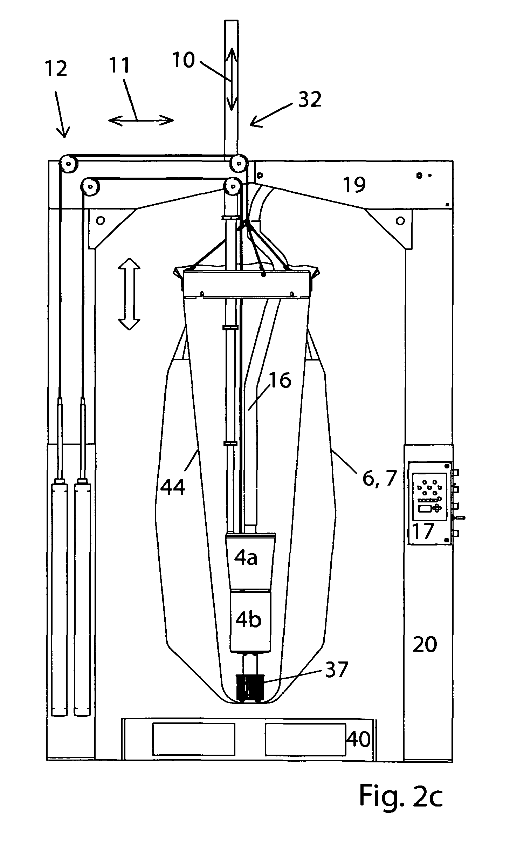

Die Figuren 1 und 2 zeigen die gleiche Entleervorrichtung, jedoch mit unterschiedlichen Vorgehensweisen der Entleerung, die später erläutert werden.

Die Entleervorrichtung besteht dabei jeweils aus einem in diesem Fall portalförmigen Grundgestell 12 mit zwei beabstandeten Vertikalstreben 20, die durch eine horizontale Querstrebe 19 am oberen Ende stabil miteinander verbunden sind.

Das Grundgestell 12, welches auch nur aus einem einfachen Galgen bestehen könnte, ist so groß dimensioniert, dass ein voller BigBag als Transportbehälter 6 auf einer Palette 40 stehend zwischen die Vertikalstreben 20 und mittig unter die Querstrebe 19 eingefahren und abgestellt werden kann und darüber bis zur Querstrebe 19 noch ausreichend Platz für die übrigen Komponenten der Entleervorrichtung ist.

Diese übrigen Komponenten könnten statt an dem Grundgestell auch an einer Gebäudedecke aufgehängt sein, so dass dann überhaupt kein Grundgestell mehr notwendig wäre.

Dies ist vor allem der Saugkopf 4, der von oben her durch die obere Öffnung in den Transportbehälter 6 hinein abgesenkt werden kann und von dort über das Saugrohr 25, welches in diesem Fall nach unten aus dem Gehäuse 30 des eigentlichen Saugkopfes 4 vorsteht, Material absaugt und über den Saugschlauch 16 abtransportiert, der mit dem oberen Ende des Saugkopfes 4 dicht verbunden ist.

Dieser Saugkopf 4 ist am unteren Ende einer vertikalen Führung 32 befestigt, die hier in einer dreifach teleskopierbaren Führungsstange 32 mit drei Teleskopelementen 32a, b, c besteht und dazu dient, Kräfte, die in Querrichtung 11 zur Längsrichtung 10 der Führung 32 auf den Saugkopf 4 ausgeübt werden durch Berührung mit dem verfestigten Schüttgut 13 im Transportbehälter 6 aufzunehmen, ohne dass die Querposition des Saugkopfes 4, insbesondere dessen Oberteiles 4a, verändert wird.

In Figur 1 wird das Oberteil 4a des Saugkopfes 4 durch die Führung 32 lediglich in Querrichtung 11 gestützt, die Höhenverlagerung des Saugkopfes erfolgt dagegen über ein erstes Hebezeug 5 aus einem Seilzug 3, an dem das Saugkopfoberteil aufgehängt ist und nach oben oder unten bewegt wird.

Zu diesem Zweck ist das Seil 2 des Seilzuges 3 über eine Umlenkrolle 8 in der Querstrebe 19 zu einer der Vertikalstreben 20 umgelenkt und dort mit einem vertikal an oder in der Vertikalstrebe 20 befestigten Saugkopfzylinder 14 verbunden, so dass durch Ein- und Ausfahren der Kolbenstange dieses Zylinders 14 der Saugkopf 4 auf- und abbewegt werden kann.

In den Figuren 1 und 2 ist darüber hinaus der um die Führungsstange 32 herum verlaufende Haltering 1, an dem die Schlaufen 39 des BigBags 6 eingehängt sind, die an dessen obersten Rand vernäht sind, mit einem weiteren Hebezeug 5', welches wiederum einen Seilzug 3' umfasst, ebenfalls anhebbar und absenkbar. Auch hier ist das nach oben laufende Seil 2 über eine Umlenkrolle 9 zu einem Behälterzylinder 24 in oder an einer der Vertikalstreben 20 des Grundgestells 12 geführt.

Die Zylinder 14, 24 enthalten in Figur 2a zusätzlich jeweils einen Sensor 36, 36' zur Bestimmung der Ausfahrlänge der Kolbenstange und damit der Hubhöhe der daran hängenden Komponenten.

Dabei ist in den Figuren 2b und c zusätzlich ein Transportbehälter 6 in Form eines BigBags dargestellt, der mit einem Inliner 44, also einem zusätzlichen inneren Foliensack, ausgestattet ist, welcher ebenfalls zusätzlich mit seinem oberen, offenen Ende an dem gleichen Haltering 1 befestigt werden kann. Die obere, für das Absaugen benutzbare, Öffnung dieses Inliners 44 ist jedoch im Durchmesser wesentlich geringer als der größte Durchmesser des Transportbehälters und nur geringfügig größer als der Durchmesser des Saugkopfes 4.

Wie Figur 1 zeigt, genügt es bei einem nicht frei fließenden Produkt und insbesondere einem verdichteten Pulver als Schüttgut 13 nicht, das Saugrohr 25 mit seiner nach unten gerichteten Saugrohröffnung 25' auf die Mitte des Schüttgutes 13 abzusenken und von dort nach unten zu arbeiten, denn nur bei einem gut rieselfähigen Schüttgut würde dabei ein von den Rändern nachrutschendes kegelförmiges Absaugloch entstehen.

Bei dem vorliegenden nicht frei fließenden, schlecht rieselfähigen Schüttgut ist bereits aus der Steilheit der Wände des Absaugloches 18 in Figur 1 erkennbar, dass hier bei Abtrag von oben der Grund des Loches wesentlich breiter gesaugt werden muss, was im vorliegenden Fall dadurch ermöglicht wird, dass das Unterteil 4b des Saugkopfes 4 gegenüber dessen Oberteil 4a seitlich verschwenkbar ist:

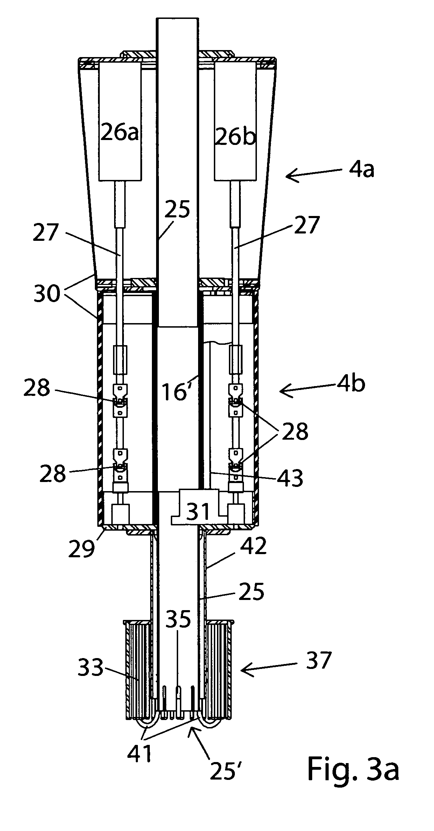

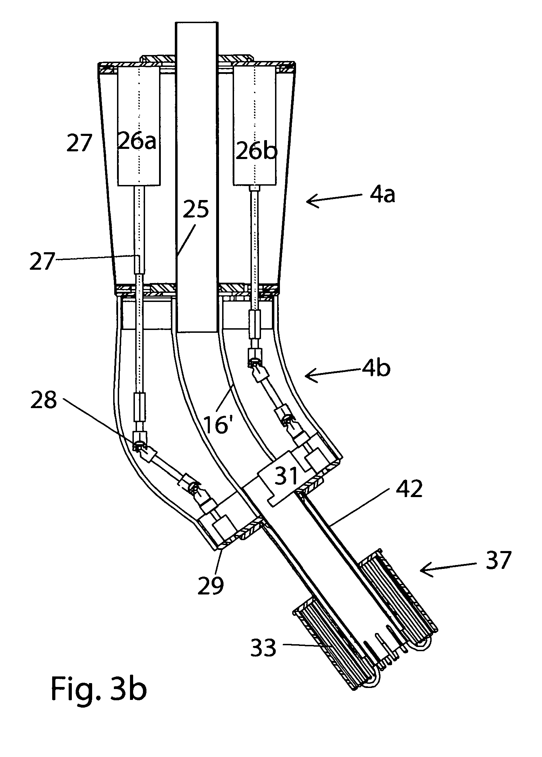

Wie die Figuren 3a und 3b zeigen, wird dies dadurch ermöglicht, dass das Saugrohr 25 im Bereich des Unterteiles 4b als flexibler Saugschlauch 16 ausgebildet ist, um ihn zusammen mit dem Unterteil 4b verbiegen zu können.

Zu diesem Zweck ist auch das Gehäuse 30 des Unterteiles 4b aus biegsamem Material gestaltet, welches den Saugschlauch 16 in radialem Abstand ringförmig umgibt, während das analog angeordnete Gehäuse 30 des Oberteiles 4a aus starrem Material ausgebildet sein kann.

Das Gehäuse 30 des Unterteiles 4b wird durch eine untere Endplatte 29 unten verschlossen. Die Verbiegung wird in diesem Fall bewirkt, indem im Oberteil 4a um das Saugrohr 25 herum in vier gleichmäßig verteilten Winkelpositionen Schwenkzylinder 26a bis 26d angeordnet sind, die beispielsweise an der oberen Stirnplatte des Gehäuses 30 des Oberteiles 4a befestigt sind und mit den Kolbenstangen 27 nach unten weisen, die sich auch durch das Unterteil 4b hindurch erstrecken und mit ihrem freien Ende am Gehäuse 30 des Unterteiles 4b befestigt sind, beispielsweise direkt an deren unterer Endplatte 29.

Indem diese Kolbenstangen 27 in ihrem Verlauf gelenkig sind und in diesem Fall jeweils zwei beabstandete Gelenke 28 aufweisen, die jedoch vorzugsweise nur jeweils eine begrenzte Auslenkung in alle Richtungen erlauben und z. B. als Kardangelenk ausgebildet sind, kann durch gezieltes Ein- und Ausfahren der einzelnen Kolbenstangen 27 in Relation zueinander jede gewünschte Schrägstellung der unteren Endplatte 29 erreicht werden und damit auch des zentral und im rechten Winkel aus dieser unteren Endplatte 29 vorstehenden Saugrohres 25 mit seiner stirnseitigen Saugrohröffnung 25'.

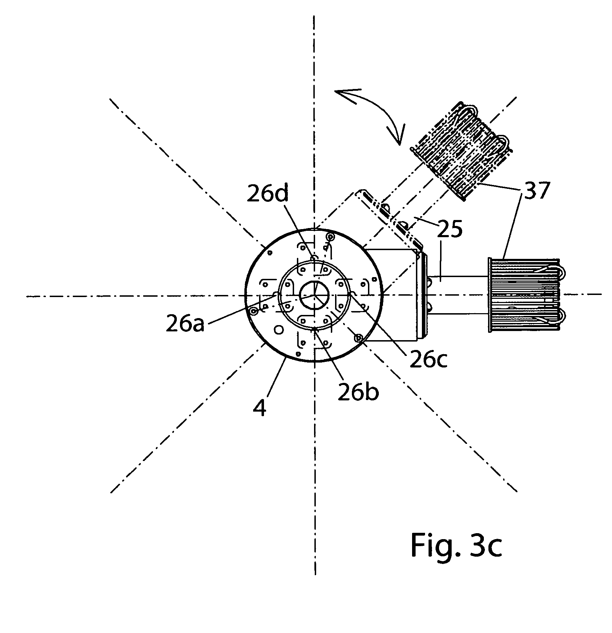

Auf diese Art und Weise können - mit Hilfe einer Steuerung 17, die die Ein- und Ausfahrbewegungen der Schwenkzylinder 26a, b, c, d zueinander koordiniert steuert - das Saugrohr 25, wie in Figur 3c in Längsrichtung 10 der Führung 32 betrachtet, nacheinander in einzelne Auslenkstellungen verbracht werden, oder es kann auch eine Drehbewegung des Endes des Saugrohres 25 um die Mitte des in Querrichtung stillstehenden Oberteiles 4a herum simuliert werden, ohne dass Oberteil 4a oder Unterteil 4b, also deren Gehäuse 30, tatsächlich gedreht werden.

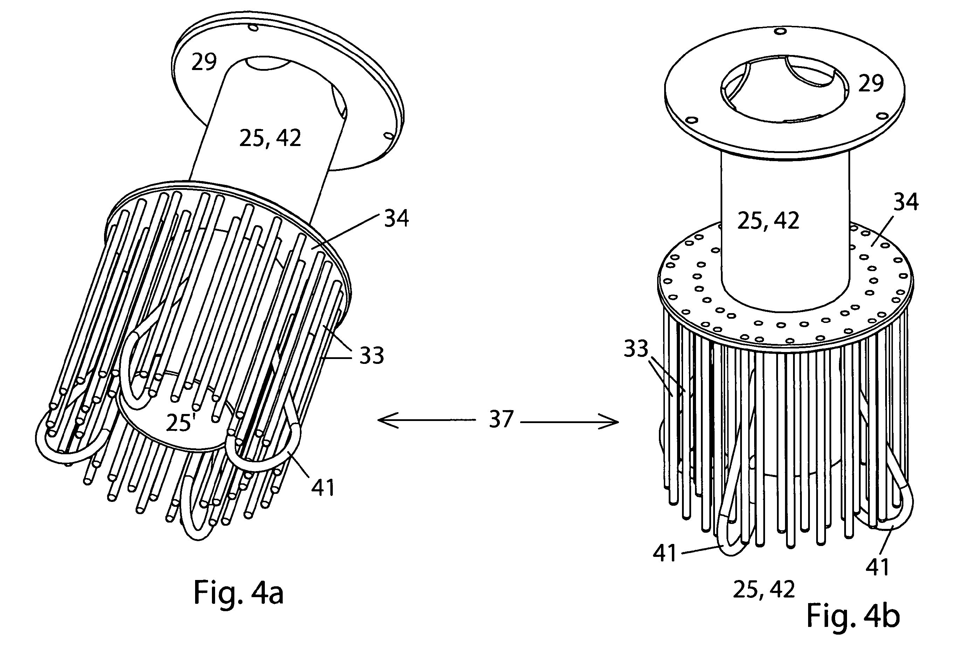

Die Figuren 1 bis 3 zeigen ferner im Bereich des freien Endes des Saugrohres 25 um dieses herum einen Schwingkranz 37, wie er in den Figuren 4a und 4b im Detail dargestellt ist.

Dieser Schwingkranz 37 dient dazu, durch Anlage von Schwingelementen, hier einer Vielzahl von Schwingstäben 33, am umgebenden Schüttgut 13 dieses aufzulockern und zu fluidisieren und dadurch überhaupt erst absaugbar in die Saugrohröffnung 25' hinein zu machen.

Wie die Figuren 4 zeigen, ist von der Saugrohröffnung 25' zurückversetzt eine ringförmige Basisplatte 34 um das Saugrohr 25 herum angeordnet. Von dieser, in Querrichtung zum Saugrohr 25 liegenden Basisplatte 34 aus ragen eine Vielzahl von Schwingstäben 33 in Richtung des freien Endes des Saugrohres 25 ab, über das sie auch eine gewisse Strecke vorstehen.

In diesem Fall sind die Schwingstäbe 33 alle gleich lang und sie sind in zwei Ringen um das Saugrohr 25 herum angeordnet.

Der Abstand der einige Millimeter dicken Schwingstäbe 33 ist in der Regel größer als ihr Durchmesser, so dass sie sich auch im schwingenden Zustand nicht gegenseitig berühren.

Durch die nur einseitige Befestigung der Schwingstäbe 33 an der Basisplatte 34 können deren frei auslaufende Enden sehr gut schwingen und bei Kontakt mit dem Schüttgut 13 dieses auflockern.

Zwischen den Schwingstäben 33 sind ferner vier über den Umfang verteilte, zu tropfenförmigen Schlaufen gebogene Drähte als Abstandshalter 41 zu erkennen, die mit beiden Enden am Saugkopf befestigt sind und die radial über den Schwingkranz 37 hinaus vorstehen und vor allem eine zu starke Annäherung des Transportbehälters 6 oder des Foliensackes an die Saugrohröffnung 25 und damit ein Festsaugen daran verhindern sollen.

Zu diesem Zweck stehen die Abstandshalter 41 radial und auch in axialer Richtung über den Schwingkopf 37 vor.

Je nach Gestaltung der Schwingstäbe 33 - beispielsweise wenn deren freie Enden etwas radial nach innen in den Bereich der Saugrohröffnung 25' hineingebogen werden - könnte auf diese Abstandshalter jedoch auch verzichtet werden.

Zum Schwingen angeregt werden die Schwingstäbe 33 durch den Vibrator 31, der - wie in den Figuren 3 ersichtlich - im Inneren des Gehäuses 30 im

Unterteil 4b z. B. auf der Endplatte 29 befestigt ist, die den unteren stirnseitigen Abschluss des Gehäuses 30 des Unterteiles 4b bildet. Der Vibrator 31 wird mittels Druckluft betrieben, die Ihm über eine im Gehäuse 30 geführte Druckluftleitung 43 zugeführt wird.

Figur 3a und 3b zeigen ferner, dass die Basisplatte 34 nicht direkt auf dem Außenumfang des Saugrohres 25 sitzen muss, sondern auf einem Hüllrohr 42 sitzen kann, das gemäß Figur 3a das eigentliche Saugrohr 25 außen umgibt.

Wichtig ist jedoch lediglich, dass der Vibrator 31 schwingungstechnisch möglichst gut an die Schwingelemente, in diesem Fall die Schwingstäbe 33, angekoppelt ist, sei es über das Saugrohr 25 direkt oder das das Saugrohr 25 umgebende Hüllrohr 42.

Während Figur 1 zeigt, wie von der Oberfläche des Schüttgutes 13 her mittels Ausschwenken des Saugrohres 25 ein relativ breiter Krater in das Schüttgut von oben her eingearbeitet werden kann, zeigen die Figuren 2 die bevorzugte Abbauweise eines schwer rieselfähigen Schüttgutes 13 wie etwa eines Pulvers mittels der erfindungsgemäßen Entleervorrichtung:

Zunächst wird gemäß Figur 2a die Saugrohröffnung 25' in der Mitte auf die Oberfläche des Schüttgutes 13 aufgesetzt. Das Unterteil 4b des Saugkopfes 4 ist dabei nicht gegenüber dem Oberteil 4a ausgelenkt, so dass das in der Saugrohröffnung 25' endende Saugrohr 25 mit der in aller Regel vertikal verlaufenden Längsrichtung 10 der Führungsstange 32 fluchtet, die die Längsführung des Saugkopfes 4 bewirkt.

In dieser Stellung wird bei eingeschalteter Absaugung der Saugkopf 4 abgesenkt und dadurch ein schmales zentrales Saugloch 18 erzeugt, dessen Durchmesser kaum größer ist als das Gehäuse 30 des Saugkopfes 4, bis sich die Saugrohröffnung 25' knapp über dem Boden des Transportbehälters 6 befindet.

Wegen der mangelnden Rieselfähigkeit wird dieses schmale hohe Absaugloch 18 trotz der senkrechten Wände nicht einstürzen.

Nachdem dieser Zustand erreicht ist, wird durch seitliches Auslenken in unterschiedliche Querrichtungen und/oder simulierte Kreisbewegung der Saugrohröffnung 25'mit zunehmendem Radius das untere Ende des Absaugloches 18 immer weiter zu einem breiten, kammerartigen Absaugloch 18' verbreitert, bis es schließlich annähernd den gesamten inneren Durchmesser des Transportbehälters 6 besitzt.

Anschließend wird das etwa kegelförmige Dach dieses verbreiterten Absaugloches 18' von unten her mittels entsprechender Bewegungen z. B. kreisender Bewegungen des Schwingkranzes 37 und damit der Saugrohröffnung 25' von unten nach oben abgearbeitet, bis die verbleibende Decke aus Schüttgut 13 so dünn ist, dass sie von selbst einbricht.

Das Ganze kann unterstützt werden durch ein Hochziehen des Halteringes 1 und damit einem Hochziehen und nach Innen Ziehen der Seitenwände des Transportbehälters 6 mittels eines zweiten Hebzeuges 5' (aus Übersichtlichkeitsgründen nur in Figur 1 dargestellt), was die Seitenwände aus Schüttgut 13 ebenfalls zusätzlich zum Einstürzen bringt, vor allem wenn dabei der Transportbehälter 6 vollständig vom Boden, also in diesem Fall der Palette 40 abgehoben und danach wieder auf dem Boden oder die Palette 40 abgesetzt wird.

Diese vertikale Verlagerung des Transportbehälters 6 wird von der gleichen Steuerung 17 bewirkt wie die Auslenkbewegungen des Unterteiles 4b des Saugkopfes 4 und deren Auf- und Abbewegung und wird dabei berücksichtigt.

Zum Schluss ist auf diese Art und Weise - wie in Figur 2c dargestellt - der Transportbehälter 6 vollständig entleert und bildet eine Kegelform oder Kegelstumpfform mit Spitze nach unten, in der sich nach dem Absaugen des letzten Restes an Schüttgut der Schwingkranz 37 befindet.

Der Saugkopf 4 kann nun nach oben aus dem Transportbehälter herausgefahren werden und dieser gegen einen neuen gefüllten Transportbehälter 6 ausgetauscht werden.

### BEZUGSZEICHENLISTE

- 1: Haltering
- 2: Seil
- 3, 3': Seilzug
- 4,4': Saugkopf
- 4a: Oberteil
- 4b: Unterteil
- 5,5': Hebezeug
- 6,6': Transportbehälter
- 7: Oktabin
- 8: Umlenkrolle
- 9: Umlenkrolle
- 10: Längsrichtung
- 11: Querrichtung
- 12: Grundgestell
- 13: Schüttgut
- 14: Saugkopfzylinder
- 15: Absaugvorrichtung
- 16, 16': Saugschlauch
- 17: Steuerung
- 18,18': Absaugloch
- 19: Querstrebe
- 20: Vertikalstrebe
- 24: Behälterzylinder
- 25: Saugrohr
- 25': Saugrohröffnung
- 26a, b, c, d: Schwenkzylinder
- 27: Kolbenstange
- 28: Gelenk
- 29: Endplatte
- 30: Gehäuse
- 31: Vibrator
- 32: Führung, Teleskopstange
- 32a, b, c: Teleskopelement
- 33: Schwingstab
- 34: Basisplatte
- 35: Schlitz
- 36, 36': Sensor
- 37: Schwingkranz
- 38: Staubabdeckung
- 39: Schlaufe
- 40: Palette
- 41: Abstandshalter
- 42: Hüllrohr
- 43: Druckluftleitung
- 44: Inliner

## Patentansprüche

1. Entleervorrichtung zum Absaugen von Schüttgut (13), insbesondere Pulver, aus einem oben offenen Transportbehälter (6) mit
- einer Absaugvorrichtung (15), die mit Unterdruck beaufschlagt ist und einen Saugkopf (4) mit einem Saugrohr (25) und einem Vibrator (31) umfasst,
- einem ersten Hebezeug (5), mit dessen Hilfe der Saugkopf (4) von oben her in den Transportbehälter (6) absenkbar und aus diesem heraushebbar ist,
**dadurch gekennzeichnet, dass**
- das erste Hebezeug (5) für den Saugkopf (4) zusätzlich eine aufrecht stehende Führung (32) umfasst, die in der Lage ist, Kräfte quer, insbesondere horizontal, zur Längserstreckung (10) der Führung (32) aufzunehmen,
- der Saugkopf (4) ein an dem unteren Ende der Führung (32) befestigtes Oberteil (4a) und ein gegenüber dem Oberteil (4a) in Querrichtung (11) zur Längsrichtung (10) der Führung (32) verschwenkbares Unterteil (4b) umfasst
- im Bereich des freien Endes des Saugrohres (25) am Unterteil (4b) mehrere Schwingelemente, insbesondere Schwingstäbe (33), angeordnet sind, die mit dem Vibrator (31) schwingungstechnisch gekoppelt sind und mit dem einen Ende frei im Abstand zum Saugrohr (25) enden.

2. Entleervorrichtung nach Anspruch 1,
**dadurch gekennzeichnet, dass**
- das Saugrohr (25) im Bereich des auslenkbaren Unterteils (4b) des Saugkopfes (4) wenigstens teilweise als flexibler Saugschlauch (16') ausgebildet ist, und/oder
- über dem Umfang verteilt mehrere, insbesondere vier, Schwenkzylinder, insbesondere Schwenkvorrichtungen (26), insbesondere Pneumatikzylinder, im Oberteil (4a) des Saugkopfes (4) um das Saugrohr (25) herum angeordnet sind, deren Kolbenstangen (27) im freien Endbereich insbesondere gelenkig ausgebildet sind und mit ihren freien Enden an einer unteren Endplatte (29) des Unterteils (4b) des Saugkopfes (4) befestigt sind, so dass durch unterschiedliches Ausfahren der einzelnen Schwenkzylinder (26) die Endplatte (29) im gewünschten Winkel zum unteren Ende des Oberteiles (4a) eingestellt werden kann.

3. Entleervorrichtung nach einem der vorhergehenden Ansprüche, **dadurch gekennzeichnet, dass**
- das Saugrohr (25) aus der Endplatte (29) des Unterteiles (4b) vorsteht, und/oder
- sowohl das Oberteil (4a) als auch das Unterteil (4b) des Saugkopfes (4) von einem geschlossenen Gehäuse (30) umgeben sind, in dem sich die Schwenkzylinder (26) einschließlich der Kolbenstangen und deren gelenkige oder biegsame Bereiche befinden.

4. Entleervorrichtung nach einem der vorhergehenden Ansprüche, **dadurch gekennzeichnet, dass**
- der Vibrator (31) ein mittels Druckluft betriebener Vibrator (31), insbesondere ein Turbinenvibrator, ist, und/oder
- der Vibrator (31) in seiner Frequenz einstellbar ist.

5. Entleervorrichtung nach einem der vorhergehenden Ansprüche, **dadurch gekennzeichnet, dass**
- die Schwingelemente, insbesondere Schwingstäbe (33), an einer Basisplatte (34) befestigt sind, die das Saugrohr (25) vom freien Ende zurückversetzt kragenartig umgibt, und/oder
- die Schwingelemente, insbesondere Schwingstäbe (33), parallel zur Wandung des Saugrohres (25) im Abstand zum Saugrohr (25) außerhalb davon verlaufen, insbesondere in mehreren umlaufenden Reihen, und/oder
- die Schwingelemente, insbesondere Schwingstäbe (33) über das freie Ende des Saugrohres (25) hinaus vorstehen.

6. Entleervorrichtung nach einem der vorhergehenden Ansprüche, **dadurch gekennzeichnet, dass**
- die Wandung des Saugrohres (25) vom freien Ende her eingebrachte Schlitze (35) umfasst, und/oder
- die Schwingelemente, insbesondere Schwingstäbe (33) mit dem Vibrator (31) schwingungstechnisch gekoppelt sind und vom Rest des Saugkopfes (4) entkoppelt sind, und/oder
- die axiale Länge der Schwingelemente, insbesondere Schwingstäbe (33), mindestens dem Halben, besser dem Ganzen, Durchmesser des Saugrohres (25) entspricht.

7. Entleervorrichtung nach einem der vorhergehenden Ansprüche, **dadurch gekennzeichnet, dass**
- die Schwingstäbe (33) aus Metall bestehen und einen Durchmesser von 1 mm bis 10 mm, insbesondere von 2 mm bis 5 mm, besitzen, und/oder
- die Entleervorrichtung einen Sensor (36) zum Detektieren der Annäherung und/oder Kontaktierung des Saugkopfes gegen das Schüttgut, insbesondere in vertikaler und/oder in horizontaler Richtung, aufweist, und/oder
- der Radius der maximalen Auslenkung des freien Endes des Saugrohres (25) und insbesondere dessen Schwingkranzes (37) größer ist als der Durchmesser des Gehäuses (30) des Saugkopfes (4), insbesondere mindestens um den Faktor 1,5 größer ist.

8. Entleervorrichtung nach einem der vorhergehenden Ansprüche, **dadurch gekennzeichnet, dass**
- die Führung (32) eine Teleskopstange (32) mit mindestens zwei Teleskopelementen (32a, b) ist, und/oder
- das erste Hebezeug (5) für den Saugkopf (4) einen Seilzug (3) umfasst, der insbesondere über wenigstens eine Umlenkrolle (8) zu einem Saugkopfzylinder (14), insbesondere Pneumatikzylinder, insbesondere an der Vertikalstrebe (20) des Grundgestells (12) geführt ist, und/oder
- das erste Hebezeug (5) für den Saugkopf (4) darin besteht, dass die Führung (32) als Arbeitszylinder, insbesondere als Teleskopzylinder, ausgebildet ist.

9. Entleervorrichtung nach einem der vorhergehenden Ansprüche, **dadurch gekennzeichnet, dass**
- die Entleervorrichtung ein zweites Hebezeug (5') zum Anheben des Transportbehälters (6) umfasst, insbesondere mit einem horizontal umlaufenden runden oder polygonen Haltering (1) zum Befestigen des oberen Endes des Transportbehälters (6) oder dessen Inliner, durch den hindurch die Führung (32) verläuft, und/oder
- der Durchmesser des Halterings (1) kleiner ist als der Durchmesser des oberen Endes des Transportbehälters (6), und/oder
- das zweite Hebezeug (5') einen Seilzug (3') umfasst, der über wenigstens eine Umlenkrolle zu einem Behälterzylinder (24) insbesondere an der Vertikalstrebe (20) des Grundgestells (12) geführt ist.

10. Entleervorrichtung nach einem der vorhergehenden Ansprüche, **dadurch gekennzeichnet, dass**
- die Entleervorrichtung eine Steuerung (17) umfasst, die wenigstens die Auslenkung des Unterteiles (4b) gegenüber dem Oberteil (4a) des Saugkopfes (4) steuert und in der Lage ist, unterschiedliche Auslenkungen und Abfolgen von Auslenkungen programmgesteuert durchzuführen, insbesondere Kreis oder Kreuz-Bewegungen des Unterteiles (4b), insbesondere mit zunehmendem Radius, und/oder
- die Steuerung (17) auch die Hub- und Senkbewegung des ersten Hebezeuges (5) für den Saugkopf (4) und/oder des zweiten Hebezeuges (5') für den Transportbehälter (6) steuert.

11. Verfahren zum Entleeren von Schüttgut (13), insbesondere Pulver, aus einen nach oben offenen Transportbehälter (6) mittels einer Entleervorrichtung , insbesondere nach einem der vorhergehenden Ansprüche, **dadurch gekennzeichnet, dass**
- mit einem Saugkopf (4) ein enges Absaugloch (18), welches kaum grö-βer ist als der Saugkopf (4), durch vertikales Absenken im Schüttgut (13) eingebracht wird, bis sich der Saugkopf (4) nahe des Bodens des Transportbehälters (6) befindet, und
- anschließend das untere Ende dieses engen vertikalen Absaugloches (18) zunächst im unteren Bereich erweitert wird durch entweder wechselseitiges Auslenken des Unterteiles (4b) des Saugkopfes (4) gegenüber dem Oberteil (4a) oder durch kreisende Bewegungen des Unterteiles (4b), und
- danach die Decke dieses erweiterten Absaugloches (18') von unten nach oben abgearbeitet wird durch nach oben Bewegen des Saugkopfes (4) unter wechselseitigen Auslenkbewegungen oder Kreisbewegungen des Unterteiles (4b) des Saugkopfes (4).

12. Verfahren nach einem der vorhergehenden Verfahrensansprüche, **dadurch gekennzeichnet, dass**
- die Wände des Absaugloches (18, 18') über dem Saugkopf (4) durch Hochziehen des Hebezeuges (5') für den Transportbehälter (6) zum Einsturz gebracht werden, und/oder
- das Schüttgut (13) nur an der Absaugstelle fluidisiert wird mittels einseitig am Saugkopf (4), insbesondere dem Saugrohr (25), befestigten, frei endenden Schwingelementen, insbesondere Schwingstäben (33), in der Umgebung der Saugrohr-Öffnung, und/oder
- zum Vergrößern des Durchmessers des Absaugloches (18) lediglich das Unterteil (4b) des Saugkopfes (4) gegenüber dem Oberteil (4a) seitlich ausgelenkt wird.

13. Verfahren nach einem der vorhergehenden Verfahrensansprüche, **dadurch gekennzeichnet, dass**
- beim Einbringen des engen Absaugloches (18) bis in den unteren Bereich des Schüttgutes (13) das Unterteil (4b) fluchtend zum Oberteil (4a) des Saugkopfes (4) ausgerichtet ist oder das Unterteil (4b) Auslenkbewegungen oder Kreisbewegungen vollzieht, deren Radius nur geringfügig größer ist als der Durchmesser des Gehäuses (30) des Saugkopfes (4), und/oder
- die Steuerung (17) abhängig von der Produktart des Schüttgutes (13) und insbesondere dessen Rieselfähigkeit unterschiedliche Bewegungsabläufe des Saugkopfes (4) durchläuft, insbesondere Kombinationen aus Auslenkbewegungen des Unterteils (4b) gegenüber dem Oberteil (4a) des Saugkopfs (4) und vertikale Bewegungen des Saugkopfes (4) und/oder Vertikalbewegungen des Transportbehälters (6) , und/oder
- der Vibrator (31) mittels Druckluft betrieben wird und der Unterdruck zum Beaufschlagen der Absaugvorrichtung (15) ebenfalls mittels Druckluft erzeugt wird, insbesondere mittels Druckluftejektoren.

## Claims

1. An emptying device for vacuum extracting bulk materials (13), in particular powder from a transport container (6) that is open on top, comprising
- a suction device (15) that is loaded with vacuum and includes a suction head (4) with a suction tube (25) and a vibrator (31);
- a first lifting device (5) through which the suction head (4) can be lowered from above into the transport container (6) and can be lifted out of the transport container,
- wherein the first lifting device (5) additionally includes a vertically oriented support (32) for the suction head (4), wherein the vertical support (32) is configured to receive forces transversal, in particular horizontal to the longitudinal extension (10) of the support (32),
- wherein the suction head (4) includes a top portion (4a) attached at the lower end of the support (32) and a lower portion (4b) that is pivotable relative to the upper portion (4a) in transversal direction (11) relative to the longitudinal direction (10) of the support (32),
- wherein plural vibration elements, in particular vibration rods (33) are arranged at the lower portion (4b) in the portion of the free end of the suction tube (25), wherein the vibration rods are coupled to vibrate together with the vibrator (31) and freely terminate with one end at a distance from the suction tube (25).

2. The emptying device according to claim 1,
- wherein the suction tube (25) in the portion of the deflectable lower portion (4b) of the suction head (4) is configured at least partially as a flexible suction hose (16') and/or
- wherein plural, in particular four pivot cylinders, in particular pivot devices (26), in particular pneumatic cylinders are arranged in the top portion (4a) of the suction head (4) about the suction tube (25) distributed over the circumference, wherein the piston rods (27) of the pivot cylinders in the free end portion are configured in particular with links and are attached with their free ends at a lower end plate (29) of the bottom element (4b) of the suction head (4), so that the end plate (29) is adjustable at a desired angle to the lower end of the upper portion (4a) through different extensions of the particular pivot cylinders (26).

3. The emptying device according to one of the preceding claims,
- wherein the suction tube (25) protrudes from the end plate (29) of the lower portion (4b) and/or
- wherein the upper portion (4a) and also the lower portion (4b) of the suction head (4) is enveloped by a closed housing (30) in which the pivot cylinders (26) including the piston rods and their linked or flexible portions are arranged.

4. The emptying device according to one of the preceding claims,
- wherein the vibrator (31) is a vibrator (31) that is driven by compressed air, in particular a turbine vibrator, and/or
- wherein the vibrator (31) is frequency adjustable.

5. The emptying device according to one of the preceding claims,
- wherein the vibration elements, in particular the vibration rods (33) are attached at a base plate (34) which envelops the suction tube (25) like a collar offset from the free end and/or
- wherein the vibration elements, in particular the vibration rods (33) extend parallel to the wall of the suction tube (25) at a distance from the suction tube (25) outside of the suction tube (25), in particular in plural circumferential rows, and/or
- wherein the vibration elements, in particular the vibration rods (33) protrude beyond the free end of the suction tube (25).

6. The emptying device according to one of the preceding claims,
- wherein the wall of the suction tube (25) includes slots introduced from a free end (35), and/or
- wherein the vibration elements, in particular the vibration rods (33) are coupled in vibration with the vibrator (31) and are decoupled from the rest of the suction head (4) and/or
- wherein the axial length of the vibration elements, in particular of the vibration rods corresponds at least half the diameter, better the entire diameter of the suction tube (25).

7. The emptying device according to one of the preceding claims,
- wherein the vibration rods (33) are made from metal and have a diameter of 1 mm to 10 mm, in particular of 2 mm to 5 mm, and/or
- wherein the emptying device has a sensor (36) for detecting an approach and/or contacting of the suction head with the bulk material, in particular in vertical and/or horizontal direction, and/or
- wherein the radius of the maximum deflection of the free end of the suction tube (25) and in particular its vibration collar (37) is greater than the diameter of the housing (30) of the suction head (4), in particular greater by at least a factor of 1.5.

8. The emptying device according to one of the preceding claims,
- wherein the support (32) is a support rod with at least two telescope elements (32a, b) and/or
- wherein the first lifting device (5) for the suction head (4) includes a cable pull (3) which is run over at least one pulley roller (8) to a suction head cylinder (14), in particular a pneumatic cylinder, in particular at the vertical strut (20) of the base frame (12) and/or
- wherein the first lifting device (5) for the suction head (4) is configured in that the support (32) is configured as an operating cylinder, in particular as a telescope cylinder.

9. The emptying device according to one of the preceding claims,
- wherein the emptying device includes a second lifting device (5') for lifting the transport container (6), in particular with a horizontally circumferential circular or polygonal support ring (1) for attaching the upper end of the transport container (6) or its liner through which the support (32) extends and/or
- wherein the diameter of the support ring (1) is smaller than the diameter of the upper end of the transport container (6), and/or
- wherein the second lifting device (5') includes a cable pull (3') which is supported through at least one deflection roller to a container cylinder (24), in particular supported at the vertical strut (20) of the base element (12).

10. The emptying device according to one of the preceding claims,
- wherein the emptying device includes a control (17) which controls at least the deflection of the lower portion (4b) relative to the upper portion (4a) of the suction head (4) and which is configured to perform different deflections and sequences of deflections under program control, in particular circular or cross-wise movements of the lower portion (4b) in particular with increasing radius and/or
- wherein the control (17) also controls the lifting and lowering movements of the first lifting device (5) for the suction head (4) and/or of the second lifting device (5') for the transport container (6).

11. The method for emptying bulk material (13), in particular powder, from a transport container (6) that is open on top through an emptying device, in particular according to one of the preceding claims,
- wherein a tight suction hole (18) is introduced with a suction head (4), wherein the suction hole is hardly larger than the suction head (4) and wherein the suction hole is introduced through vertical lowering in the bulk material (13) until the suction head (4) is arranged proximal to the base of the transport container (6), and
- wherein the lower end of the tight vertical suction hole (18) is initially expanded in the lower portion either through alternating deflection of the lower portion (4b) of the suction head (4) relative to the upper portion (4a) through circular movements of the lower portion (4b), and
- wherein the ceiling of this expanded suction hole (18') is subsequently, worked from the bottom to the top through moving the suction head (4) upward under alternating deflection movements or circular movements of the lower portion (4b) of the suction head (4).

12. The method according to one of the preceding method claims,
- wherein the walls of the suction hole (18, 18') above the suction head (4) are collapsed through pulling the lifting element (5') for the transport container (6) up and/or
- wherein the bulk material (13) is only fluidized at the suction location with freely terminating vibration elements that are attached on one side at the suction head (4), in particular the suction tube (25), in particular vibration rods (33) in the circumference of the suction tube opening, and/or
- wherein in order to enlarge the diameter of the suction hole (18), only the lower portion (4b) of the suction head (4) is laterally deflected relative to the upper portion (4a).

13. The method according to one of the preceding method claims,
- wherein introducing the tight suction hole (18) into the lower portion of the bulk material (13) is performed with the lower portion (4b) oriented in alignment with the upper portion (4a) of the suction head (4) or the bottom portion (4b) performs deflection movements or circular movements whose radius is only slightly larger than the diameter of the housing (30) of the suction head (4), and/or
- wherein the control (17) as a function of the product type of the bulk material (13) and in particular its flow capabilities performs different movements of the suction head (4), in particular combinations of deflection movements of the lower portion (4b) relative to the upper portion (4a) of the suction head (4) and performs vertical movements of the suction head (4) and/or vertical movements of the transport container (6), and/or
- wherein the vibrator (31) is operated with compressed air and the vacuum for loading the suction device (15) is also generated with compressed air, in particular through compressed air ejectors.

## Revendications

1. Dispositif de décharge pour l'aspiration de produit en vrac (13) en particulier de la poudre depuis un conteneur de transport ouvert en haut (6) comprenant
- un dispositif d'aspiration (15) qui subit une dépression et comprend une tête d'aspiration (4) avec un tube d'aspiration (25) ou un vibrateur (31),
- un premier engin de levage (5), à l'aide duquel la tête d'aspiration (4) peut être abaissée depuis le haut dans le conteneur de transport (6) et en être sortie par soulèvement, **caractérisé en ce que**
- le premier engin de levage (5) comprend pour la tête d'aspiration (4) en supplément un guide latéral (32) qui est en mesure d'absorber des forces transversales, en particulier horizontales à l'extension longitudinale (10) du guide (32),
- la tête d'aspiration (4) comprend une partie supérieure (4a) fixée sur l'extrémité inférieure du guide (32) et une partie inférieure (4b) pivotante par rapport à la partie supérieure (4a) dans la direction transversale (11) au sens longitudinal (10) du guide (32),
- dans la zone de l'extrémité libre du tube d'aspiration (25) sont disposés sur la partie inférieure (4b) plusieurs éléments oscillants, en particulier des barres oscillantes (33) qui sont accouplées au vibrateur (31) par technique d'oscillation et se terminent par une extrémité libre à distance du tube d'aspiration (25).

2. Dispositif de décharge selon la revendication 1,
**caractérisé en ce que**
- le tube d'aspiration (25) est réalisé dans la zone de la partie inférieure orientable (4b) de la tête d'aspiration (4) au moins partiellement en tant que tuyau d'aspiration flexible (16'), et/ou
- plusieurs dispositifs de pivotement (26) en particulier quatre cylindres de pivotement, en particulier des dispositifs de pivotement (26), en particulier des cylindres pneumatiques sont disposés répartis sur la périphérie dans la partie supérieure (4a) de la tête d'aspiration (4) autour du tube d'aspiration (25) dont les tiges de piston (27) sont réalisées dans la zone d'extrémité libre en particulier de manière articulée et sont fixées par leurs extrémités libres à une plaque d'extrémité inférieure (29) de la partie inférieure (4b) de la tête d'aspiration (4), de sorte que par différentes sorties de chacun des cylindre de pivotement (26), la plaque d'extrémité (29) est réglée à l'angle souhaité par rapport à l'extrémité de la partie supérieure (4a).

3. Dispositif de décharge selon l'une des revendications précédentes,
**caractérisé en ce que**
- le tube d'aspiration (25) fait saillie au-delà de la plaque d'extrémité (29) de la partie inférieure (4b), et/ou
- aussi bien la partie supérieure (4a) que la partie inférieure (4b) de la tête d'aspiration (4) sont entourées par un carter fermé (30) dans lequel se trouvent les cylindres pivotants (26) avec les tiges de piston et leur zones articulées et flexibles.

4. Dispositif de décharge selon l'une des revendications précédentes,
**caractérisé en ce que**
- le vibrateur (31) est un vibrateur (31) entraîné par air comprimé, en particulier un vibrateur à turbines, et/ou
- le vibrateur (31) est réglable en fréquence.

5. Dispositif de décharge selon l'une des revendications précédentes,
**caractérisé en ce que**
- les éléments oscillants, en particulier les barres oscillantes (33), sont fixés sur une plaque de base (34) qui entourent le tube d'aspiration (25) depuis l'extrémité libre décalée en forme de col, et/ou
- les éléments oscillants en particulier les barres oscillantes (33) s'étendent parallèlement à la paroi du tube d'aspiration (25) à distance du tube d'aspiration (25) à l'extérieur de ce dernier, en particulier en plusieurs séries circulaires, et/ou
- les éléments oscillants, en particulier les barres oscillantes (33) s'étendent au-delà de l'extrémité libre du tube d'aspiration (25).

6. Dispositif de décharge selon l'une des revendications précédentes,
**caractérisé en ce que**
- la paroi du tube d'aspiration (25) comprend des fentes (35) ménagées depuis l'extrémité libre, et/ou
- les éléments oscillants, en particulier les barres oscillantes (33) sont accouplés par oscillation au vibrateur (31) et sont désaccouplés du reste de la tête d'aspiration (4), et/ou
- la longueur axiale des éléments oscillants, en particulier des barres oscillantes (33) correspondent au moins à la moitié, de préférence à l'intégralité du diamètre du tube d'aspiration (25).

7. Dispositif de décharge selon l'une des revendications précédentes,
**caractérisé en ce que**
- les barres oscillantes (33) se composent de métal et possèdent un diamètre de 1 mm à 10 mm, en particulier de 2 mm à 5 mm, et/ou
- le dispositif de décharge présente un capteur (36) pour la détection de l'approche et/ou de l'entrée en contact de la tête d'aspiration avec le produit en vrac, en particulier dans la direction verticale et/ou horizontale, et/ou
- le rayon de la déviation maximale de l'extrémité libre du tube d'aspiration (25) et en particulier de sa couronne oscillante (27) est plus grand que le diamètre du carter (30) de la tête d'aspiration (4) en particulier au moins d'un facteur 1,5.

8. Dispositif de décharge selon l'une des revendications précédentes,
**caractérisé en ce que**
- le guide (32) est une tige télescopique (32) avec au moins deux éléments télescopiques (32a, b), et/ou
- le premier outil de levage (5) comprend, pour la tête d'aspiration (4), un câble de traction (3) qui est guidé en particulier sur au moins une poulie de renvoi (8) en direction d'un cylindre de tête d'aspiration (14), en particulier un vérin pneumatique, en particulier sur le montant vertical (20) du bâti de base (12), et/ou
- le premier outil de levage (5) pour la tête d'aspiration (4) consiste **en ce que** le guide (32) est réalisé comme un cylindre de travail, en particulier comme cylindre télescopique.

9. Dispositif de décharge selon l'une des revendications précédentes,
**caractérisé en ce que**
- le dispositif de décharge comprend un second outil de levage (5') pour soulever le conteneur de transport (6), en particulier avec une bague de retenue (1) horizontale, circulaire, ronde ou polygonale pour la fixation de l'extrémité supérieure du conteneur de transport (6) ou de sa sache (Inliner), à travers laquelle s'étend le guide (32), et/ou
- le diamètre de la bague de retenue (1) est inférieur au diamètre de l'extrémité supérieure du conteneur de transport (6), et/ou
- le second outil de levage (5') comprend un câble de traction (3') qui est guidé sur au moins une poule de renvoi en direction d'un cylindre de récipient (24) en particulier le long du montant vertical (20) du bâti de base (12).

10. Dispositif de décharge selon l'une des revendications précédentes,
**caractérisé en ce que**
- le dispositif de décharge comprend une commande (17) qui commande au moins la déviation de la partie inférieure (4b) par rapport à la partie supérieure (4a) de la tête d'aspiration (4) et est en mesure d'exécuter des déviations et des séquences de déviation commandées par programme, en particulier des mouvements circulaires ou croisés de la partie inférieure (4b), en particulier avec un rayon croissant, et/ou,
- la commande (17) pilote également le mouvement de soulèvement et d'abaissement du premier engin de levage (5) pour la tête d'aspiration (4) et/ou un second engin de levage (5') pour le conteneur de transport (6).

11. Procédé pour la décharge de produit en vrac (13), en particulier de la poudre depuis un conteneur de transport ouvert vers le haut au moyen d'un dispositif de décharge, en particulier selon l'une des revendications précédentes,
**caractérisé en ce qu'**
- avec une tête d'aspiration (4), il est introduit un trou d'aspiration étroit (18) qui est à peine plus grand que la tête d'aspiration (4), par abaissement vertical dans le produit en vrac (13), jusqu'à ce que la tête d'aspiration (4) se trouve proche du fond du récipient de transport (6), et
- ensuite l'extrémité inférieure de ce trou étroit vertical d'aspiration (18) est élargie tout d'abord dans la zone inférieure soit par déviation alternée de la partie inférieure (4b) de la tête d'aspiration (4) par rapport à la partie supérieure (4a) soit par des mouvements circulaires de la partie inférieure (4b), et
- ensuite le plafond de ce trou élargi d'aspiration (18') est travaillé de bas en haut par déplacement vers le haut de la tête d'aspiration (4) et des mouvements de déviation ou circulaires alternés de la partie inférieure (4b) de la tête d'aspiration (4).

12. Procédé selon l'une des revendications de procédé précédentes,
**caractérisé en ce que**
- les parois du trou d'aspiration (18, 18') sont amenées à s'effondre au-dessus de la tête d'aspiration (4) en tirant vers le haut l'engin de levage (5') pour le conteneur de transport (6), et/ou
- le produit en vrac (13) n'est fluidisé qu'au point d'aspiration, au moyen d'éléments oscillants libres à une extrémité fixée sur une face sur la tête d'aspiration (4), en particulier sur le tube d'aspiration (25), en particulier au moyen de barres oscillantes (33) à proximité de l'ouverture du tube d'aspiration, et/ou
- pour agrandir le diamètre du trou d'aspiration (18), la partie inférieure (4b) de la tête d'aspiration (4) est déviée latéralement par rapport à la partie supérieure (4a).

13. Procédé selon l'une des revendications de procédé précédentes,
**caractérisé en ce qu'**
- en introduisant le trou étroit d'aspiration (18) jusque dans la zone inférieure du produit en vrac (13), la partie inférieure (4b) est orientée en alignement avec la partie supérieure (4a) de la tête d'aspiration (4) ou la partie inférieure (4b) exécute des mouvements de déviation ou des mouvements circulaires dont le rayon est légèrement supérieure au diamètre du carter (30) de la tête d'aspiration (4), et/ou
- la commande (17) traverse indépendamment de la nature du produit en vrac (13) et en particulier de l'aptitude à la fluidisation, différents cycles de mouvement de la tête d'aspiration (4), en particulier des combinaisons de mouvements de déviation de la partie inférieure (4b) par rapport à la partie supérieure (4a) de la tête d'aspiration (4) et des mouvements verticaux de la tête d'aspiration (4) et/ou des mouvements verticaux du conteneur de transport (6), et/ou
- le vibrateur (31) est entraîné au moyen d'air comprimé et la dépression est générée pour l'application sur le dispositif d'aspiration (15) également au moyen d'air comprimé, en particulier au moyen d'éjecteurs d'air comprimé.
